# DEMANDE DE BREVET EUROPEEN

(11) **EP 2 292 484 A1**
(43) Date de publication de la demande: **09.03.2011**
(21) Numéro de dépôt: 10174909.1
(22) Date de dépôt: 01.09.2010
(51) Int. Cl.: B60T 13/74, B60T 7/10, B60T 7/12

(54) **Système de frein de stationnement électrique à commande répartie pour véhicule automobile et véhicule comportant un tel système**

(30) Priorité: 03.09.2009 FR 0955998
(71) Demandeur: Peugeot Citroën Automobiles SA, 78140 Vélizy-Villacoublay (FR)
(72) Inventeur: Gouriet, Pascal, 92320, CHATILLON (FR)

(57) **Abrégé**

L'invention concerne un système de frein de stationnement électrique pour véhicule (1), notamment pour véhicule automobile, ledit système étant apte à activer des étriers de frein motorisés (22, 23) couplés sur les roues arrière (ARG, ARD) du véhicule (1), ledit système comportant les organes suivants :
- une unité de freinage de service ESC (20) ;
- des moyens logiques de décision (81) délivrant un signal de commande (SC) aux étriers motorisés ;
- un bouton de commande (27) pour activer les moyens logiques de décision ;
- des moyens de commande des étriers motorisés ;

lesdits organes étant reliés entre eux par un faisceau principal (21), acheminant l'alimentation vers les différents organes depuis une batterie d'alimentation électrique (10) ainsi que les signaux de commande et de contrôle des différents organes, **caractérisé en ce que** les moyens de commande sont répartis en deux modules de commande (61 et 62) dédiés respectivement aux roues arrière du véhicule ; la sortie de chaque module de commande étant reliée directement à chaque étrier motorisé par un faisceau secondaire (24).

## Description

L'invention concerne les systèmes de freinage dit de stationnement ou de parking électrique, connus également sous l'acronyme FSE pour Frein de Stationnement Electrique.

Elle se rapporte plus particulièrement à l'architecture de commande de récepteurs de freinage équipés d'un moteur électrique, ou motoréducteur, disposés sur les roues arrière d'un véhicule, notamment d'un véhicule automobile. De tels récepteurs sont traditionnellement appelés étriers motorisés.

Les systèmes de freins de stationnement électriques peuvent être regroupés pour l'essentiel dans deux familles.

La première utilise un motoréducteur qui agit sur des câbles de frein reliés au récepteur de freinage. Selon cette conception, le motoréducteur remplace le levier habituellement disposé à proximité du conducteur du véhicule. Ce type de frein de stationnement électrique est traditionnellement appelé tire-câble. Les étriers sont alors de type conventionnel.

La seconde famille utilise un motoréducteur directement embarqué sur le récepteur de freinage. Selon cette conception, chacune des roues sur laquelle agit le frein de stationnement comporte son propre motoréducteur, soit deux motoréducteurs pour un essieu traditionnel à deux roues. Les freins de stationnement électrique actuels sont commandés au moyen d'un interrupteur électrique du type bouton poussoir, que l'utilisateur enfonce pour activer le frein de stationnement.

Différentes architectures de commande sont utilisées pour commander les étriers motorisés.

Parmi celles-ci, on connaît notamment du document US2009/02001124, une architecture de commande dans laquelle chaque roue de l'essieu arrière est munie d'un module ou boîtier de commande de freinage (6, 8 et 7, 9) intégrant un motoréducteur (6 et 7), un circuit électronique de commande, un calculateur (µC) dédié à la roue sur laquelle il est monté et un étage de puissance. Les deux boîtiers communiquent entre eux et avec les autres organes de freinage tels que l'unité de commande du FSE (11), le bouton d'activation du FSE (5) et l'unité de commande générale de freinage ESC (10).

Les chiffres mis entre parenthèses correspondent aux repères des figures du document US2009/02001124.

La multiplicité des signaux de commande et de contrôle de l'état des étriers motorisés, assure une redondance d'informations qui permet de durcir l'architecture de commande en termes de sureté de fonctionnement.

Dans ce type d'architecture, les étriers motorisés embarquent le circuit électronique de commande des motoréducteurs. Le boîtier de commande est donc embarqué sur la roue.

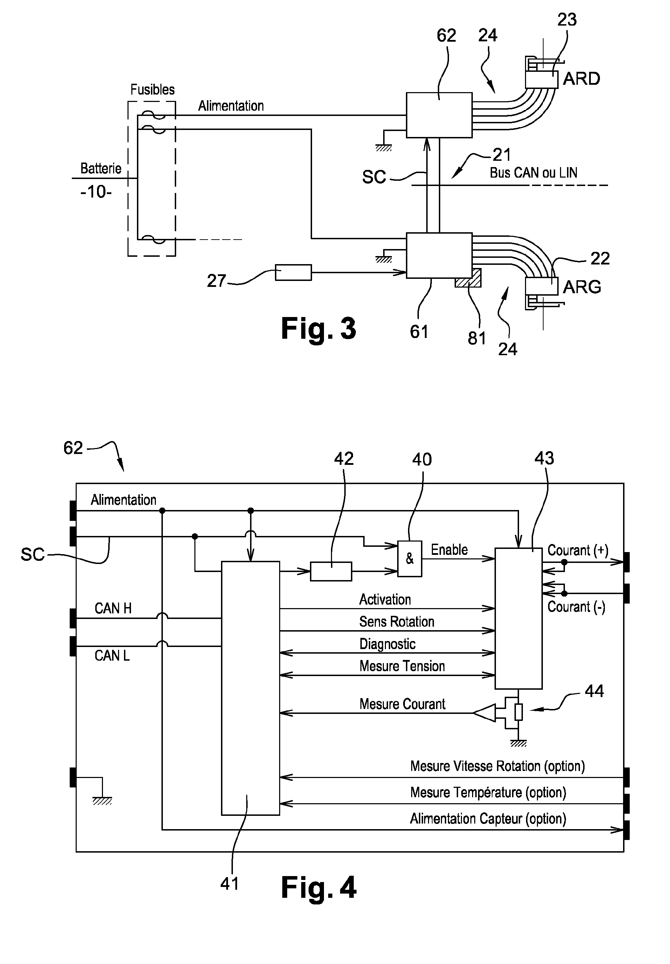

Les moyens logiques de décision pour la commande du FSE sont implantés sur l'unité de commande générale de freinage ESC (référencée 10 sur la figure 3)

Cette architecture se rapproche d'une architecture de type connue sous la dénomination de « solution intégrée », associée à des étriers motorisés « intelligents », connue également sous la dénomination anglo-saxonne de « Smart Actuator ». Un calculateur séparé et dédié assure la redondance.

Les solutions utilisant des « smart actuator » nécessitent de loger le circuit électronique de commande sur le pivot de roue, ce qui rend délicat la protection thermique et mécanique dudit circuit.

On connaît également une architecture plus simple, proche de celle qui vient d'être décrite, dans laquelle, le circuit électronique de commande et le calculateur sont regroupés dans un circuit unique, déporté du motoréducteur et donc de la roue ; cette solution est connue également sous la dénomination anglo-saxonne « stand alone ».

Un faisceau électrique spécifique à l'implantation du système de freinage de service ESC et du stationnement électrique FSE dans le véhicule, assure le transport de l'alimentation et des signaux de commande et de contrôle des différents organes mis en jeu dans le système de freinage du véhicule (freinage de service ESC et de stationnement FSE)

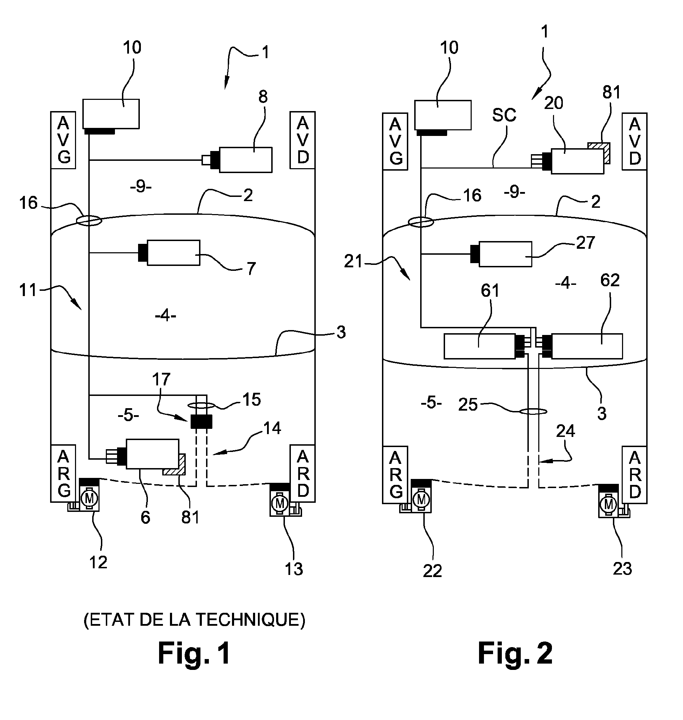

La figure 1 illustre schématiquement une architecture de ce type.

Sur cette figure, on a représenté schématiquement un véhicule 1, en vue de dessus, par ses quatre roues AVG, AVD, ARG et ARD, sa ligne de pare-brise 2 (se confondant avec le tablier du véhicule), et une ligne horizontale 3 séparant l'habitacle 4 du coffre 5 du véhicule 1.

L'avant du véhicule 1 est orienté vers le haut de la figure.

On a représenté schématiquement la disposition des différents organes mis en jeu dans la commande du frein de stationnement électrique FSE.

Ainsi, l'unité de commande centralisée du FSE 6 est disposée, dans cet exemple, au niveau du coffre 5 du véhicule 1, le bouton d'activation du FSE 7, appelé par la suite bouton FSE, est situé sur la planche de bord et, l'unité de commande générale de freinage ESC 8 est disposée sous le capot moteur 9, contre le tablier en avant de la ligne de pare-brise 2, sensiblement en retrait par rapport à la roue avant droite AVD du véhicule 1.

Un module de batterie et ses fusibles de protection (l'ensemble sera appelé batterie 10), est également disposé sous le capot moteur 9, en avant de la ligne de pare-brise 2 et sensiblement au dessus de la roue avant gauche AVG.

On a représenté le faisceau de commande 11 reliant les différents organes 6, 7 8, 12 et 13 entre eux et à la batterie 10.

Par faisceau, on entend tous les fils ou câbles de puissance ou de signal transportant l'énergie nécessaire à l'alimentation électrique des différents organes ainsi qu'au support des données de commande et de contrôle de l'état de ces différents organes, dont un bus CAN ou LIN.

Dans cette architecture, on dit que la puissance est amenée de l'unité de commande du FSE 6 vers chaque motoréducteur 12 et 13 , donc chaque roue arrière gauche ARG et droite ARD, par une partie du faisceau principal 11 cheminant d'abord à l'intérieur du coffre 5 puis, par une deuxième partie de faisceau, appelé faisceau secondaire 14, représenté en trait interrompu, passant sous la caisse du véhicule par des trous de passage sous-caisse 15. Le passage 16 du faisceau principal 11 entre la batterie 10 et l'habitacle 4 est prévu au niveau du tablier dont la représentation est confondue avec la ligne de pare-brise 2. Pour faciliter l'assemblage, on distingue le faisceau principal 11 et le ou les faisceaux secondaires 14 ; le ou les faisceaux secondaires 14 se raccrochant au faisceau principal via des interconnexions, ou connecteurs 17. Avec une telle architecture, on comprend que la longueur nécessaire de faisceau pour amener de la puissance depuis le module de commande FSE 6 jusqu'à chacune des roues arrière ARG et ARD, est liée à l'implantation précise des différents organes 6, 7 et 8 du système de freinage du véhicule. Cette longueur peut être relativement importante et varie suivant le type de véhicule et du choix de l'architecture retenue pour le stationnement électrique. Il faut ainsi un faisceau « typé » pour chaque type de véhicule.

L'effort de serrage du disque de l'étrier motorisé, est fonction du courant de serrage disponible. Ce courant est intimement lié à la résistance ohmique de l'ensemble de la chaîne, faisceau et motoréducteur inclus. Donc, plus la longueur du faisceau est importante, plus la résistance ohmique est importante et moins l'effort de serrage est important. Ceci implique des contraintes supplémentaires sur le dimensionnement des composants électroniques du FSE.

Le système selon l'invention a notamment pour but de pallier cet inconvénient en proposant une solution qui permet de réduire la longueur du faisceau entre les modules de commande FSE et les motoréducteurs et qui permet de plus de pouvoir utiliser un même faisceau pour différents types de véhicule. Avantageusement, le système selon l'invention permet de relâcher les exigences sur les allocations des calculateurs, en partant du principe qu'il est plus facile de loger un module de commande à l'arrière, à droite et à gauche du véhicule, plutôt qu'un calculateur unique, central et éloigné des étriers motorisés, disposé soit à l'arrière du coffre soit sous le capot moteur.

Une des caractéristiques du système selon l'invention est relative à la conception du faisceau secondaire.

La liaison est directe entre le module de commande et l'étrier motorisé, ce qui en facilite la réparabilité.

Un autre avantage est de pouvoir dimensionner au mieux le faisceau, en décorrélant l'aspect tenue des performances (résistance ohmique, boucle dynamique) de l'aspect d'acheminement du courant depuis la batterie, située à l'avant du véhicule, vers l'arrière de véhicule.

A cet effet, l'invention a pour premier objet un système de frein de stationnement électrique pour véhicule, notamment pour véhicule automobile, ledit système étant apte à activer des étriers de frein motorisés couplés sur les roues arrière du véhicule, ledit système comportant les organes suivants :
- une unité de freinage de service ESC ;
- des moyens logiques de décision délivrant un signal de commande aux étriers motorisés ;
- un bouton de commande pour activer les moyens logiques de décision ;
- des moyens de commande des étriers motorisés ;
lesdits organes étant reliés entre eux par un faisceau principal, acheminant l'alimentation vers les différents organes depuis une batterie d'alimentation électrique ainsi que les signaux de commande et de contrôle des différents organes.

Le dit système est **caractérisé en ce que** les moyens de commande sont répartis en deux modules de commande dédiés respectivement aux roues arrière du véhicule ; la sortie de chaque module de commande étant reliée directement à chaque étrier motorisé par un faisceau secondaire.

Selon un mode de réalisation, les moyens logiques de décision sont hébergés dans l'unité de freinage de service ESC et le bouton de commande est couplé à l'unité de freinage de service ESC.

Selon une variante de réalisation, les moyens logiques de décision sont hébergés totalement ou partiellement dans un des modules de commande, choisi comme module maître, l'autre module de commande devenant le module esclave. Selon cette variante, le bouton de commande est couplé au module de commande maître.

Selon une caractéristique du système selon l'invention, les modules de commande sont disposés au plus près des étriers motorisés de manière à réduire la longueur du faisceau secondaire ; ledit faisceau secondaire amenant la puissance électrique délivrée en sortie des modules de commande directement aux étriers motorisés.

Selon une autre caractéristique, chaque module de commande comporte un circuit électronique de commande activé par le signal de commande et un étage de puissance du type pont en H.

Avantageusement, un module de commande est apte à gérer les informations délivrées par une pluralité de capteurs d'état de l'étrier motorisé auquel il est couplé, parmi lesquelles : la mesure de vitesse de rotation du disque de frein, la mesure de la température au niveau du disque, l'effort de serrage du disque ; l'effort de serrage étant proportionnel au courant mesuré sur une des sorties de l'étage de puissance.

L'invention a pour deuxième objet un véhicule automobile intégrant un système de freinage électrique tel que décrit ci-dessus.

D'autres caractéristiques et avantages de la présente invention apparaîtront à la lecture de la description détaillée qui va suivre, en regard des dessins annexés, donnés à titre d'exemple non limitatif et sur lesquels :
- la figure 1, déjà décrite, présente schématiquement un véhicule automobile équipé d'un système FSE de l'état de la technique à module de commande centralisée ;
- la figure 2 présente schématiquement un véhicule automobile équipé d'un système FSE à module de commande répartie selon l'invention ;
- la figure 3 présente une variante d'un système à commande répartie selon l'invention ; et
- la figure 4 présente un schéma de principe d'un module de commande FSE d'un système selon l'invention.

Sur les figures, les mêmes éléments sont désignés par les mêmes références numériques.

En référence à la figure 2, on a représenté le système FSE à commande répartie selon l'invention en reprenant la même représentation schématique du véhicule 1 de la figure 1 (Etat de la technique).

Dans cette implantation, les moyens logiques de décision 81; précédemment hébergés dans le module de commande FSE 6 de la figure 1, sont déportés au niveau de l'unité de commande de freinage ESC 20.

Ces moyens logiques de décision 81 permettent l'élaboration de la consigne de pilotage (serrage, desserrage, vitesse de rotation),

Cette consigne est transmise au modules de commande 61, 62 par un signal appelé signal de commande SC.

Les calculateurs de l'unité de commande de freinage ESC 20, initialement dédiés au freinage ESC, sont programmés pour gérer, en parallèle, les moyens logiques de décision 81 du FSE.

Les moyens logiciels restent identiques, seul le codage des instructions à gérer par les calculateurs est modifié.

L'unité de commande FSE, qui était centralisée dans l'implantation de la figure 1, est divisée selon la présente invention en deux modules de commande FSE 61 et 62 ; les modules 61, 62 étant respectivement dédiés aux roues arrière ARG, ARD du train arrière du véhicule.

Chaque module de commande 61, 62 comporte au principal un circuit électronique de commande, un calculateur (ou microcontrôleur) et un pont en H.

Chaque module de commande FSE 61, 62 reçoit le même type de signal de commande SC délivré par l'unité de commande ESC 20. Dans l'exemple, le signal de commande SC est unique. Il peut être dédoublé si un besoin accru de disponibilité de la fonction est jugé nécessaire.

Il s'agit d'un signal de redondance, qui assure l'intégrité du système. Par exemple, il peut être activé sur chaque demande de serrage ou de desserrage. C'est l'unité de freinage ESC 20 qui élabore la consigne de serrage/desserrage des étriers 22, 23.

Un bus de communication de type CAN ou LIN transporte de manière classique les différentes informations de commande et de contrôle entre l'unité de freinage ESC 20, intégrant les moyens logiques de décision du FSE, et chaque module de commande FSE 61, 62. En retour, chaque module de commande FSE 61, 62 restitue l'état de l'actionneur 22, 23.

Les faisceaux secondaires 24, en sortie des modules de commande FSE 61, 62 passent au travers de la caisse du véhicule 1 par un ou des passages 25 ménagés, par exemple dans le coffre 5 du véhicule 1.

Avec une implantation conforme au système FSE selon l'invention, on dispose de deux petits modules de commande FSE 61, 62 dédiés respectivement aux roues arrière ARG er ARD et disposés au plus près des roues ARG et ARD, intégrant chacun une électronique de commande, un convertisseur et un étage de puissance nécessaire à l'alimentation du motoréducteur.

On dispose ainsi de la puissance électrique à proximité des roues et on réduit la longueur des faisceaux secondaires 24 acheminant cette puissance aux motoréducteurs 22, 23 ainsi que la taille des connecteurs (les connecteurs sont représentés par des blocs noir sur les différentes figures).

Le module de commande 6 centralisé de l'état de la technique doit disposer d'un nombre de pins supplémentaires de 14 pins minimum.

Chaque module de commande 61, 62 selon l'invention peut se contenter d'un connecteur de 8 à 10 pins. Ce connecteur peut se scinder en deux parties :
- une partie amont, i.e. sur le faisceau principal 21, entre le module de commande FSE 61, 62 et l'unité de commande ESC 20 ;
- une partie aval, i.e. le faisceau secondaire 24, entre le module de commande FSE 61, 62 et le motoréducteur 22, 23.

Cette décomposition a l'avantage de s'affranchir des connexions 17 dans le faisceau secondaire 14 de l'état de la technique.

La figure 3 illustre une variante du système à commande répartie selon l'invention.

Dans cette variante, ce n'est plus l'unité de commande de freinage ESC 20 qui héberge les moyens logiques de décision 81 mais un des modules de commande FSE.

C'est lui qui est le maître du protocole d'échange des informations de commande des étriers motorisés. Il envoie une consigne, portée par le signal de commande SC : « Type Pilotage Etrierl » et « Type Pilotage Etrier2 » à son propre circuit électronique de commande et au module de commande 62 ; le module de commande 61 étant considéré comme le module de commande maître et le module de commande 62 étant considéré comme le module esclave.

A réception de cette consigne, les modules de commande 61, 62 activent leurs étages de puissance 43 et récupèrent un ensemble d'informations sur le bon fonctionnement de leurs actionneurs 22, 23, telle que l'estimation sur l'effort de serrage effectué.

La figure 4 illustre un exemple de module de commande qui, dans le système illustré à la figure 2, correspond aux deux modules de commande 61 et 62, qui sont indifférenciés, et qui, dans la variante de la figure 3 correspond au module esclave 62.

Le signal de commande SC est reçu, à l'entrée du module de commande 62, sur une première entrée d'un circuit logique 40 de type porte ET et sur l'entrée d'un circuit électronique de commande 41 comportant un microcontrôleur, son électronique d'alimentation et un convertisseur analogique/numérique recevant notamment les différentes informations délivrées par des capteurs externes. On trouve ainsi des capteurs représentatifs de la position de l'étrier, de la vitesse de rotation du moteur, d'effort de serrage, la mesure de la température, ... et qui sont donc logés sur l'étrier motorisé.

Ces informations capteurs sont acheminées par le faisceau secondaire 24. Une première sortie du microcontrôleur 41 est couplée à l'entrée d'un circuit 42 de type « chien de garde » ou Watch Dog, en terminologie anglo-saxonne.

Ce circuit 42 a pour but de contrôler la continuité du flux du signal de commande SC. Le module de commande FSE 62 peut avoir les ressources nécessaires pour recevoir également les informations issues de tous types de capteurs qui peuvent être utilisés pour assurer le bon fonctionnement du motoréducteur et qui sont hébergés dans celui-ci.

La sortie de ce circuit 42 est couplée à la seconde entrée du circuit logique 40.

La sortie du circuit logique 40 est couplée à une première entrée d'un étage de puissance du type pont en H 43. Un pont en H est traditionnellement utilisé pour le pilotage des petits moteurs électriques de type motoréducteur. Des deuxième et troisième sorties du circuit électronique 41 sont couplées respectivement à des deuxième et troisième entrées du pont en H 43. Ces deux entrées reçoivent respectivement les informations d'activation du motoréducteur et le sens de rotation du motoréducteur, c'est-à-dire les informations de serrage ou de desserrage des disques des étriers motorisés. Ces deux informations sont indispensables pour l'activation de l'étage de puissance, afin de garantir la sûreté de fonctionnement.

Les deux sorties du pont en H 43 sont reliées par des liaisons filaires 24 au motoréducteur 23 de l'étrier motorisé auquel il est relié, par l'intermédiaire du faisceau secondaire 24, représenté dans cet exemple par cinq fils.

Dans l'exemple de réalisation, le fonctionnement du module de commande 61 est le suivant : le microcontrôleur du circuit électronique 41 active le pont en H 43 via la ligne tout ou rien « Activation », en y associant le signal binaire « Sens Rotation », selon le sens de rotation voulu du motoréducteur 23 pour le serrage ou le desserrage de l'étrier. En retour, le convertisseur analogique/numérique 44 reçoit : la mesure du courant de pilotage du motoréducteur 23, délivré par un pont 44, la tension aux bornes du connecteur de sortie du module de commande FSE 62, et des informations de diagnostic sur l'état de fonctionnement de l'étrier motorisé. Du point de vue de l'architecture, le système FSE selon l'invention ne nécessite aucune électronique supplémentaire. Les moyens de décision sont hébergés soit dans un calculateur existant et gérant déjà d'autres fonctionnalités, par exemple l'unité de freinage principal ESC 20, soit un des modules de commande FSE faisant office de module de commande « maître ».

Toute l'intelligence nécessaire à la commande du FSE est soit fusionnée avec celle déjà existante et utilisée pour les besoins du freinage ESC au sein de l'unité de commande de freinage ESC soit impartie totalement ou partiellement à l'un des modules de commande FSE.

## Revendications

1. Système de frein de stationnement électrique pour véhicule (1), notamment pour véhicule automobile, ledit système étant apte à activer des étriers de frein motorisés (22, 23) couplés sur les roues arrière (ARG, ARD) du véhicule (1), ledit système comportant les organes suivants :
- une unité de freinage de service ESC (20) ;
- des moyens logiques de décision (81) délivrant un signal de commande (SC) aux étriers motorisés ;
- un bouton de commande (27) pour activer les moyens logiques de décision ;
- des moyens de commande des étriers motorisés ;
lesdits organes étant reliés entre eux par un faisceau principal (21), acheminant l'alimentation vers les différents organes depuis une batterie d'alimentation électrique (10) ainsi que les signaux de commande et de contrôle des différents organes,
**caractérisé en ce que** les moyens de commande sont répartis en deux modules de commande (61 et 62) dédiés respectivement aux roues arrière du véhicule ; la sortie de chaque module de commande étant reliée directement à chaque étrier motorisé par un faisceau secondaire (24).

2. Système selon la revendication 1, **caractérisé en ce que** les moyens logiques de décision (81) sont hébergés dans l'unité de freinage de service ESC (20) et **en ce que** le bouton de commande (27) est couplé à l'unité de freinage de service ESC (20).

3. Système selon la revendication 1, **caractérisé en ce** les moyens logiques de décision (81) sont hébergés totalement ou partiellement dans un (61) des modules de commande (61, 62), choisi comme module maître, l'autre module de commande (62) devenant le module esclave, et en ce que le bouton de commande (27) est couplé au module de commande maître (61).

4. Système selon l'une des revendications précédentes, **caractérisé en ce que** les modules de commande (61, 62) sont disposés au plus près des étriers motorisés (22, 23) de manière à réduire la longueur du faisceau secondaire (24) ; ledit faisceau secondaire (24) amenant la puissance électrique délivrée en sortie des modules de commandes directement aux étriers motorisés (22, 23).

5. Système selon l'une des revendications précédentes, **caractérisé en ce** chaque module de commande comporte un circuit électronique de commande (41) activé par le signal de commande (SC) et un étage de puissance (43) du type pont en H.

6. Système selon la revendication 5, **caractérisé en ce que** le module de commande (61, 62) est apte à gérer les informations délivrées par une pluralité de capteurs d'état de l'étrier motorisé (22, 23) auquel il est couplé, parmi lesquelles : la mesure de vitesse de rotation du disque de frein, la mesure de la température au niveau du disque, l'effort de serrage du disque ; l'effort de serrage étant proportionnel au courant mesuré sur une des sorties (44) de l'étage de puissance (43).

7. Véhicule automobile intégrant un système de freinage électrique selon l'une des revendications précédentes.
